Europäisches Patentamt

European Patent Office

Office européen des brevets

(19)

(11)  **EP 0 401 916 B1**

(12)  ## EUROPÄISCHE PATENTSCHRIFT

(45) Veröffentlichungstag und Bekanntmachung des Hinweises auf die Patenterteilung:
**18.12.1996  Patentblatt 1996/51**

(51) Int Cl.⁶: **H04M 1/72**

(21) Anmeldenummer: **90201409.1**

(22) Anmeldetag: **05.06.1990**

(54) **Kennungssuche bei nachrichtentechnischen Geräten**

Identification search for telecommunication devices

Recherche d'identification pour des appareils de télécommunications

(84) Benannte Vertragsstaaten:
**DE FR GB**

(30) Priorität: **08.06.1989  DE 3918696**

(43) Veröffentlichungstag der Anmeldung:
**12.12.1990  Patentblatt 1990/50**

(73) Patentinhaber:
• **Philips Patentverwaltung GmbH
22335 Hamburg (DE)**
Benannte Vertragsstaaten:
**DE**
• **Philips Electronics N.V.
5621 BA Eindhoven (NL)**
Benannte Vertragsstaaten:
**FR GB**

(72) Erfinder:
• **Höflinger, Jürgen, Dipl.-Ing.
D-8505 Röthenbach/Peg. (DE)**
• **Ranner, Georg, Ing.-grad.
D-8560 Lauf/Peg. (DE)**

(74) Vertreter: **Peuckert, Hermann, Dipl.-Ing. et al
Philips Patentverwaltung GmbH,
Röntgenstrasse 24
22335 Hamburg (DE)**

(56) Entgegenhaltungen:
| | |
|---|---|
| EP-A- 0 137 943 | EP-A- 0 248 351 |
| EP-A- 0 282 087 | EP-A- 0 299 515 |
| EP-A- 0 317 708 | GB-A- 2 219 466 |

**Beschreibung**

Die Erfindung betrifft ein schnurloses Telefon mit Basisstation und Mobilstation, wobei die Basisstation bzw. die Mobilstation zum Aufbau einer Verbindung mit der Mobilstation bzw. der Basisstation auf einem von n Kanälen Sendemittel zur Aussendung einer Kennung und Mittel zur Suche eines freien Kanals unter zwischen Basisstation und Mobilstation bevorzugt vereinbarten m Kanälen, mit m < n, aufweist und wobei die Mobilstation bzw. die Basisstation Prüfmittel zum Suchen des Kanals mit dieser Kennung auf den bevorzugt vereinbarten m Kanälen in einer ersten Prüfphase aufweist.

Die Erfindung betrifft weiter eine Funkstation, insbesondere eine Basisstation und/oder eine Mobilstation eines schnurlosen Telefons, wobei die Funkstation zum Aufbau einer Verbindung auf einem von n Kanälen Sendemittel zur Aussendung einer Kennung und Mittel zur Suche eines freien Kanals unter bevorzugt vereinbarten m Kanälen, mit m < n, aufweist und wobei die Funkstation Prüfmittel zum Suchen des Kanals mit dieser Kennung auf den bevorzugt vereinbarten m Kanälen in einer ersten Prüfphase aufweist.

Paarweise einander zugeordnete Funkstationen werden beispielsweise bei schnurlosen Telefonen eingesetzt, wobei ein Basisgerät und ein Mobilteil ein Funkstationspaar bilden. Die Zuordnung von Basisteil und Mobilteil zu einem Gerätepaar erfolgt über eine beiden Geräten gemeinsam vergebene geräteeigene Kennung. Diese Kennung ist ein beispielsweise binäres Datenwort, welches in beiden Geräten in einem Festwertspeicher bereits bei der Produktion der Geräte abgelegt wird. Hierbei wird sichergestellt, daß jede bereits für ein Gerätepaar vergebene Kennung kein zweites Mal für ein anderes Gerät vergeben wird. Zur Stromversorgung des Mobilteiles werden Akkumulatoren verwendet, welche bei auf dem Basisgerät aufliegendem Mobilteil von diesem geladen werden. Bei einem ankommenden Ruf eines Fernsprechteilnehmers sendet das Basisgerät auf einem freien Funkkanal die geräteeigene Kennung. Um einen ankommenden Ruf entgegenzunehmen, muß das Mobilteil daher alle ihm zugeteilten Funkkanäle laufend prüfen, ob auf einem Funkkanal seine gerätespezifische Kennung übertragen wird.

Die Zeit, die vergeht zwischen der Aussendung der geräteeigenen Kennung und dem Erkennen der geräteeigenen Kennung ist unter anderem von der Anzahl der zu untersuchenden Funkkanäle abhängig. Zur Verringerung dieser Zeitspanne ist aus EP 0 258 739 bekannt, daß jedes Funkstationspaar m Funkkanäle miteinander vereinbart und in einem RAM speichert. Als vereinbarte Funkkanäle werden zur Zeit der Vereinbarung als frei erkannte Funkkanäle gewählt. Während des Prüfzyklusses untersucht das Mobilteil nur noch die vereinbarten Funkkanäle. Hierdurch ist die Prüfzeit, die benötigt wird um nur die vereinbarten Kanäle zu überprüfen, kürzer als die Zeit, die für eine Überprüfung der gesamten Kanäle erforderlich ist.

Sind zufällig alle vereinbarten Kanäle belegt oder wird eine solche Situation durch eine Fehlfunktion geschaffen, so ist eine Verbindungsaufnahme zwischen Basisgerät und Mobilteil nicht mehr möglich.

Aus EP-A 0 137 943 ist ein Funknetz zum Übertragen von Informationen zwischen jeweils einem Paar von mehreren Funkstationspaaren über einen Funkkanal von n Funkkanälen bekannt. Um den Stromverbrauch möglichst gering zu halten und um einen möglichst schnellen Verbindungsaufbau zu erreichen vereinbart jedes Funkstationspaar vor der ersten Inbetriebnahme eine bestimmte Zahl von freien Funkkanälen, wobei diese Zahl im Vergleich zur Gesamtzahl der verfügbaren Funkkanäle gering ist. Der Empfangsteil der Funkstation ist nur für bestimmte, durch gleich lange Pausenzeiten unterbrochenen Prüfzeiten eingeschaltet, in denen er die vereinbarten Funkkanäle auf ihren Belegungszustand bzw. auf das Vorhandensein eines Hochfrequenzträgers mit einem Sicherungscode prüft. Ist einer der vereinbarten Funkkanäle durch ein fremdes Funktionspaar belegt, wird über einen anderen der vereinbarten Kanäle eine neue Kanalvereinbarung getroffen.

Aus EP-A 0 282 087 ist ein Funkübertragungssystem bekannt, bei dem von der Funkstation zur Suche eines freien Kanals in einem ersten Schritt zunächst sogenannte Prioritätskanäle abgesucht werden. Im Falle, daß diese Kanäle alle belegt sind, werden in einem zweiten Schritt weitere Kanäle abgesucht und im Falle, daß diese Kanäle wiederum belegt sind, werden in weiteren Schritten nochmals andere Kanäle abgesucht, solange bis ein freier Kanal gefunden ist.

Aufgabe der vorliegenden Erfindung ist es, bei einem schnurlosen Telefon bzw. einer Funkstation der eingangs genannten Art bei einem geringen Stromverbrauch der Mobilstation einen sicheren Gesprächsaufbau zu gewährleisten.

Diese Aufgabe wird bei einem schnurlosen Telefon der eingangs genannten Art dadurch gelöst, daß die Mobilstation bzw. die Basisstaion weitere Prüfmittel zum Suchen des Kanals mit der Kennung auf allen n Kanälen in einer zweiten Prüfphase und Mittel zur Unterbrechung der einzelnen Prüfphasen durch Wartezeiten aufweist und daß die Basisstation bzw. die Mobilstation Mittel zur Suche eines freien Kanals unter allen n Kanälen im Falle, daß alle bevorzugt vereinbarten Kanäle belegt sind, und Mittel zur Aussendung der Kennung auf dem freien Kanal für eine zeitlich begrenzte Zeitspanne aufweist, wobei die Zeitspanne länger als die Summe aus der ersten Prüfphase, der zweiten Prüfphase und den Wartezeiten ist.

Diese Aufgabe wird bei einer Funkstation gemäß dem Oberbegriff des Anspruchs 8 dadurch gelöst, daß die Funkstation weitere Prüfmittel zum Suchen des Kanals mit der Kennung auf allen n Kanälen in einer zweiten Prüfphase und Mittel zur Unterbrechung der einzelnen Prüfphasen durch Wartezeiten aufweist und daß die Funkstation Mittel zur Suche eines freien Kanals unter allen n Kanälen im Falle, daß alle bevorzugt vereinbarten Kanäle belegt sind, und Mittel zur Aussendung der Kennung auf dem freien Kanal für eine zeitlich begrenzte Zeitspanne aufweist, wobei die Zeitspanne länger als die Summe aus der ersten Prüfphase, der zweiten Prüfphase und den Wartezeiten ist.

Sobald über die Fernmeldeleitung ein Ruf an dem Basisgerät ankommt, sucht das Basisgerät innerhalb der Vorzugskanäle einen freien Kanal und sendet auf diesem Kanal die ihr zugeordnete Kennung aus. In den meisten Fällen wird innerhalb der Vorzugskanäle auch ein freier Kanal zu finden sein. Bei extremen Verkehrsdichten, d.h. bei vielen benachbarten Funkstationspaaren, z.B. in einem Bürohochhaus oder einer Börse, können jedoch unter Umständen alle Vorzugskanäle belegt sein. In diesen seltenen Fällen sucht das Basisgerät einen freien Kanal in den gesamten Funkkanälen und sendet auf diesem freien Kanal die Kennung aus. Auch das Mobilteil muß laufend überprüfen, ob am Basisgerät ein Ruf eingeht. In der ersten Prüfphase durchläuft das Mobilteil hierzu zunächst die bevorzugt vereinbarten Kanäle. Erkennt es hierbei auf keinem dieser abgesuchten Kanäle die Kennung, so schließt sich dieser einer zweite Prüfphase an. In der zweiten Prüfphase durchläuft das Mobilteil bei der Überprüfung der Funkkanäle alle zur Verfügung stehenden Funkkanäle. Erste und zweite Prüfphase bilden zusammen einen Prüfzyklus. Durch die abwechselnde Suche in den Vorzugskanälen und in allen Funkkanälen wird auf diese Weise sichergestellt, daß auch ein Verbindungsaufbauwunsch, der nicht auf einem Vorzugskanal gesendet wird, das Mobilteil sicher erreicht. Die aus Akkumulatoren mit Strom versorgten Mobilteile haben im abgesetzten Betrieb, d. h., wenn das Mobilteil nicht auf dem Basisgerät aufliegt und von diesem mit Strom versorgt wird, eine nur begrenzte Betriebszeit. Während der Wartezeiten wird ausschließlich die Betriebsbereitschaft der Mobilstation aufrechterhalten, so daß die Betriebszeit des Mobilteiles bei abgesetztem Betrieb deutlich verlängert werden kann.

In einer Ausgestaltungsform weist die Mobilstation bzw. die Basisstation Mittel auf, die sicherstellen. daß ein Prüfzyklus zum Suchen des Kanals mit der Kennung aus der ersten Prüfphase mit einer sich anschließenden ersten Wartezeit und der zweiten Prüfphase mit einer sich anschließenden zweiten Wartezeit besteht, in der der Empfangsteil der Funkstation deaktiviert ist.

Werden die vereinbarten m Kanäle blockweise, insbesondere als aus jeweils benachbarten Kanälen gebildeten Funkkanalblöcken aus den n Kanälen ausgewählt, so hat dies den Vorteil, daß der Übergang von einem Kanal zu einem unmittelbar benachbarten Funkkanal kürzere Einschwingzeiten erfordert als der Übergang von einem Funkkanal zu einem weiter abliegenden Funkkanal.

Eine einfache Zuordnung der bevorzugt vereinbarten Kanäle kann dadurch erfolgen. daß zur Zuordnung der bevorzugt vereinbarten m Kanäle die für das Funkstationenpaar vergebene Gruppennummer vorgesehen ist. Werden alle Gruppennummern bei der Fertigung der Funkstationen gleichhäufig vergeben, so ist durch die Vermischung der Funkstationspaare auf dem Vertriebsweg eine statistische, d.h. möglichst gleichmäßige, Verteilung dieser Gruppennummern zu erwarten. Benachbarte Benutzer solcher Funkstationspaare werden daher mit großer Wahrscheinlichkeit verschiedene Vorzugskanäle erhalten.

Weist die Funkstation einen Speicher zur Speicherung einer Gruppennummer auf, so kann bei der Herstellung der Funkstation diese hierin beispielsweise in binärer Darstellung abgelegt werden.

Im folgenden wird die Erfindung anhand eines Ausführungsbeispieles näher beschrieben und erläutert.

Die Zeichnung zeigt:

Fig. 1 Gerätepaar eines schnurlosen Telefons.

Fig. 2 schematische Darstellung der Funkkanäle.

Fig. 3 Zeitdiagramm eines Prüfzyklusses.

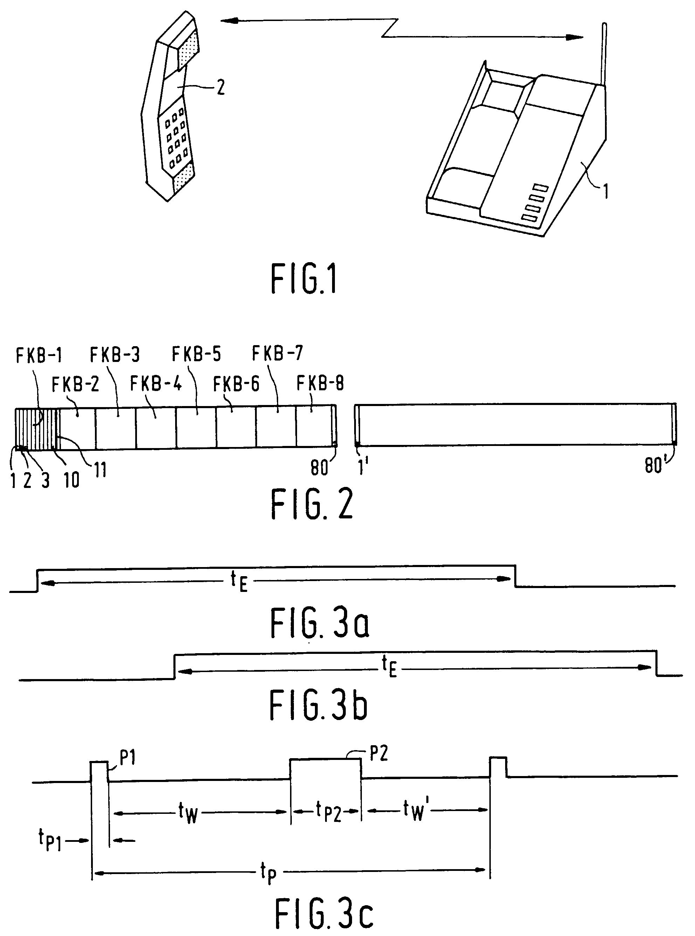

Im Ausführungsbeispiel bilden ein mit einer Fernmeldeleitung verbundenes Basisgerät 1 und ein diesem Basisgerät zugeordnetes Mobilteil 2 ein Gerätepaar eines sogenannten schnurlosen Telefones. Im Ausführungsbeispiel der Erfindung stehen dem Basisgerät 1 und dem dem Basisgerät 1 zugeordneten Mobilteil 2 achtzig Duplex-Funkkanäle zur Verfügung. In Fig. 2 sind in der einen Figuren-Hälfte die achtzig Funkkanäle 1... 80 gezeigt, die das Basisgerät 1 in Senderichtung nutzen kann. Die diesen Funkkanälen zugeordneten Gegenkanäle 1'...80', auf denen das Basisgerät empfängt, haben einen Duplexabstand von 45 MHz. Sie sind in der rechten Figuren-Hälfte dargestellt.

Um sicherzustellen, daß nur zusammengehörige Geräte eine Gesprächsverbindung aufbauen können, wird auf einem freien Duplexkanal vom einleitenden Gerät ein codiertes Kennungssignal ausgesendet. Liegt seitens des Basisgerätes z.B. ein Verbindungswunsch vor, so belegt das Basisgerät einen freien Funkkanal und sendet für eine vorgegebene Zeit seinen Kennungscode aus. Da dieser Kennungscode gerätespezifisch für jedes Funkstationspaar vorgegeben ist, wird er im folgenden als geräteeigene Kennung bezeichnet. Der Empfänger des Partnergerätes, in diesem Fall das Mobilteil, sucht im Betriebszustand "Bereit", zyklisch alle ihm zugeteilten Funkkanäle nach einem HF-Signal mit der geräteeigenen Kennung ab. Erkennt das Mobilteil die ihm zugeordnete Kennung, so belegt es die Gegenrichtung des Duplexkanals und quittiert seinerseits mit der geräteeigenen Kennung. Sobald diese vom einleitenden Gerät auf der Rückfrequenz erkannt wird, wird das Aussenden der geräteeigenen Kennung gestoppt, d.h., die Funkverbindung ist hergestellt.

Anhand einer jeden aus Basisgerät und Mobilteil bestehenden Funkstationspaar paarweise vergebenen Gruppennummer ist eine bestimmte Anzahl der Funkkanäle dem Funkstationspaar als Vorzugskanäle zugeordnet. Vorzugsweise kann hierzu die Gesamtzahl der Funkkanäle entsprechend einer Zweierpotenz in Kanalgruppen unterteilt werden. Im Ausführungsbeispiel wurde die Gesamtzahl der Kanäle in acht Kanalgruppen unterteilt, so daß jeder Kanalgruppe zehn Funkkanäle zugeordnet sind. Welche Kanalgruppe einem Funkstationspaar als Vorzugskanalblock zugeteilt ist, geht aus der Gruppennummer des Funkstationspaares hervor. Diese Gruppennummer wird im Ausführungsbeispiel bei der Herstellung der Funkgerätepaare in einem eEPROM in binärer Darstellung abgelegt. Bei der Fertigung werden alle Gruppennummern gleichhäufig vergeben. Durch die Vermischung der Funkstationspaare auf dem Vertriebsweg ist eine statistische, d.h. möglichst gleichmäßige, Verteilung dieser Gruppennummern zu erwarten, so daß benachbarte Benutzer solcher Funkstationspaare mit großer Wahrscheinlichkeit verschiedene Vorzugskanäle erhalten.

Vorzugsweise sind die in einer Kanalgruppe zusammengefaßten Vorzugskanäle unmittelbar benachbart, so daß sie auf diese Weise einen Funkkanalblock FKB-1, FKB-2, .... bilden. Dies ist insbesondere deshalb von Vorteil, da der Übergang von einem Kanal zu einem unmittelbar benachbarten Funkkanal kürzere Einschwingzeiten erfordert als der Übergang von einem Funkkanal zu einem weiter abliegenden Funkkanal.

Sobald über die Fernmeldeleitung ein Ruf an dem Basisgerät ankommt, sucht das Basisgerät innerhalb der Vorzugskanäle einen freien Kanal und sendet auf diesem Kanal für eine zeitlich begrenzte Zeitspanne, der sogenannten Einleitzeit $t_E$, die ihr zugeordnete geräteeigene Kennung aus. In den meisten Fällen wird innerhalb der Vorzugskanäle auch ein freier Kanal zu finden sein. Bei extremen Verkehrsdichten, d.h. bei vielen benachbarten Funkstationspaaren, z.B. in einem Bürohochhaus oder einer Börse, können jedoch unter Umständen alle Vorzugskanäle belegt sein. In diesen seltenen Fällen sucht das Basisgerät einen freien Kanal in den gesamten Funkkanälen und sendet auf diesem freien Kanal die geräteeigene Kennung aus.

Das vom Basisgerät 1 abgesetzte Mobilteil 2 muß laufend überprüfen, ob ein am Basisgerät 1 ankommender Ruf eingeht. Hierzu muß das Mobilteil 2 alle in Frage kommenden Funkkanäle, auf denen das Basisgerät einen Gesprächsaufbauwunsch aus senden kann, abfragen.

In einer ersten Prüfphase P1 durchläuft das Mobilteil 2 hierzu zunächst den ihm mittels der Gruppennummer vorgegebenen Vorzugskanalblock. Im Ausführungsbeispiel ist dies der Kanalblock FKB-2. Erkennt es hierbei auf keinem der abgesuchten Kanäle 11...20 des Vorzugskanalblockes die geräteeigene Kennung, so geht es für eine definierte Wartezeit $t_W$ in einen Stromsparzustand. In diesem Zustand ist der Empfangsteil deaktiviert, so daß hierdurch der Stromverbrauch des Mobilteiles entscheidend verringert wird. Nach Ablauf der auf die erste Prüfphase folgenden Wartezeit $t_W$ schließt sich dieser einer zweite Prüfphase an.

In der zweiten Prüfphase P2 durchläuft das Mobilteil 2 bei der Überprüfung der Funkkanäle alle achtzig zur Verfügung stehenden Funkkanäle. Nach Durchlaufen der Funkkanäle geht es für die Wartezeit $t_W'$ wieder in den Stromsparzustand über. Erste und zweite Prüfphase bilden zusammen einen Prüfzyklus.

Durch die abwechselnde Suche in den Vorzugskanälen FKB-2 und in allen achtzig Funkkanälen 1...80 wird auf diese Weise sichergestellt, daß auch ein Verbindungsaufbauwunsch, der nicht auf einem Vorzugskanal gesendet wird, das Mobilteil sicher erreicht. Hierzu ist die Zeit zum Durchlaufen eines Prüfzyklusses so gewählt, daß sie kleiner als die Einleitzeit $t_E$ ist. Ein Prüfzyklus setzt sich aus einer Prüfphase (P1 bzw. P2) und den Wartezeiten $t_W$ bzw. $t_W'$ zusammen. Im Ausführungsbeispiel beträgt die Einleitzeit $t_E$ 3 Sekunden, die erste Prüfphase ca. 0,2 Sekunden und die zweite Prüfphase ca. 0,9 Sekunden bei einer gesamten Prüfzykluszeit $t_P$ von 2,5 Sekunden.

Fig. 3c zeigt im Zeitdiagramm schematisch die Aufeinanderfolge der Prüfphasen P1 bzw. P2 bzw. der dazwischenliegenden Wartezeiten $t_W$ bzw. $t_W'$. Fig. 3a zeigt die Aussendezeit eines Einleitsignals. Das Einleitsignal beginnt hier kurz vor dem Beginn der Prüfphase P1. Dies ist ein günstiger Zeitpunkt. Da in den meisten Fällen ein freier Kanal im Vorzugskanalblock gefunden werden kann, wird in diesem Fall die vom Basisgerät 1 ausgesandte gerätespezifische Kennung bereits in der ersten Prüfphase abgetastet. Aber auch wenn als Übertragungskanal nur ein Funkkanal außerhalb des Vorzugskanalblocks gewählt werden müßte, so ist aus der Fig. 3a zu erkennen, daß ungefähr in der Mitte der Einleitzeit $t_E$ während der zweiten Prüfphase P2 dieser Funkkanal abgetastet wird. Die mittlere Erkennungszeit beträgt daher ein Viertel der Prüfzeit $t_P$, beim Ausführungsbeispiel also 0,75 Sekunden. Dies ist ein durchaus akzeptabler Wert.

Durch die Beschränkung der Suche während der ersten Prüfphase P1 auf die Vorzugskanäle wird gegenüber Geräten, die ohne Vorzugskanal arbeiten und daher bei vergleichbarer mittlerer Erkennungszeit zur sicheren Erkennung der geräteeigenen Kennung auf einem der achtzig Funkkanäle während eines Prüfzyklus $t_P$ zweimal eine volle (zweite) Prüfphase P2 durchlaufen müssen, durch den Betrieb des Mobilteils im Stand-by-Betrieb während der Wartephasen eine Stromeinsparung erzielt. Die auf diese Weise erzielbare Stromeinsparung ergibt sich bei vernachlässigbarem Stromverbrauch während der Wartephase $t_W$ bzw. $t_W'$ zu

$$\frac{t_{P2}-t_{P1}}{2 * t_{P2}}$$

Im Ausführungsbeispiel ergibt sich somit eine Reduzierung des Stromverbrauchs um ca. 39%, wodurch sich die Betriebsdauer des vom Basisteil 1 abgesetzten Mobilteils 2 entsprechend verlängert.

Fig. 3b zeigt den Beginn der Einleitzeit zwischen der ersten und der zweiten Prüfphase. Aus den Figuren ist zu erkennen, daß unabhängig vom Zeitpunkt des Beginns der Einleitzeit auf jeden Fall die zweite Prüfphase P2 stets innerhalb der Einleitzeit liegt und somit der Empfang der gerätespezifischen Kennung selbst dann garantiert ist, wenn diese nicht im Vorzugsblock liegt.

**Patentansprüche**

1. Schnurloses Telefon (1, 2) mit Basisstation (1) und Mobilstation (2), wobei die Basisstation (1) zum Aufbau einer Verbindung mit der Mobilstation (2) auf einem von n Kanälen Sendemittel zur Aussendung einer Kennung und Mittel zur Suche eines freien Kanals unter zwischen Basisstation (1) und Mobilstation (2) bevorzugt vereinbarten m Kanälen, mit $m < n$, aufweist und wobei die Mobilstation (2) Prüfmittel zum Suchen des Kanals mit dieser Kennung auf den bevorzugt vereinbarten m Kanälen in einer ersten Prüfphase (P1) aufweist,
   <u>dadurch gekennzeichnet,</u>
   daß die Mobilstation (2) weitere Prüfmittel zum Suchen des Kanals mit der Kennung auf allen n Kanälen in einer zweiten Prüfphase (P2) und Mittel zur Unterbrechung der einzelnen Prüfphasen (P1, P2) durch Wartezeiten ($t_w$, $t_w'$) aufweist und daß die Basisstation (1) Mittel zur Suche eines freien Kanals unter allen n Kanälen im Falle, daß alle bevorzugt vereinbarten Kanäle belegt sind, und Mittel zur Aussendung der Kennung auf dem freien Kanal für eine zeitlich begrenzte Zeitspanne ($t_E$) aufweist, wobei die Zeitspanne ($t_E$) länger als die Summe aus der ersten Prüfphase (P1), der zweiten Prüfphase (P2) und den Wartezeiten ($t_w$, $t_w'$) ist.

2. Schnurloses Telefon nach Anspruch 1,
   <u>dadurch gekennzeichnet,</u>
   daß die Mobilstation (2) Mittel aufweist, die sicherstellen, daß ein Prüfzyklus ($t_p$) zum Suchen des Kanals mit der Kennung aus der ersten Prüfphase (P1) mit einer sich anschließenden ersten Wartezeit ($t_w$) und der zweiten Prüfphase (P2) mit einer sich anschließenden zweiten Wartezeit ($t_w'$) besteht, in der jeweils der Empfangsteil der Mobilstation (2) deaktiviert ist.

3. Schnurloses Telefon nach einem der Ansprüche 1 oder 2,
   <u>dadurch gekennzeichnet,</u>
   daß als vereinbarte m Kanäle blockweise, insbesondere aus jeweils benachbarten Kanälen gebildete Funkkanalblöcke (FKB-1, FKB-2, .., FKB-8), die aus den n Kanälen ausgewählt sind, vorgesehen sind.

4. Schnurloses Telefon nach einem der Ansprüche 1 bis 3,
   <u>dadurch gekennzeichnet,</u>
   daß die Basisstation (1) und die Mobilstation (2) einen Speicher zur Speicherung einer Gruppennummer aufweisen.

5. Schnurloses Telefon nach einem der Ansprüche 1 bis 4,
   <u>dadurch gekennzeichnet,</u>
   daß die Basisstation (1) und die Mobilstation (2) aus einem Funkstationenpaar (1, 2) besteht und daß zur Zuordnung der bevorzugt vereinbarten m Kanäle die für das Funkstationenpaar (1, 2) vegebene Gruppennummer vorgesehen ist.

6. Schnurloses Telefon nach einem der Ansprüche 1 bis 5,
   <u>dadurch gekennzeichnet,</u>
   daß als Gruppennummer eine bei der Fertigung der Funkstation in etwa gleichhäufig vergebene Nummer vorgesehen ist.

7. Schnurloses Telefon nach einem der Ansprüche 1 bis 6,
   <u>dadurch gekennzeichnet,</u>
   daß zur Zuteilung eines bevorzugten Funkkanalblocks (FKB-1, FKB-2, .., FKB-8) die Gruppennummer der Basis- und Mobilstation (1, 2) vorgesehen ist.

8. Funkstation (1, 2), insbesondere Basisstation (1) und/oder Mobilstation (2) eines schnurlosen Telefons (1, 2), wobei die Funkstation (1, 2) zum Aufbau einer Verbindung auf einem von n Kanälen Sendemittel zur Aussendung einer Kennung und Mittel zur Suche eines freien Kanals unter bevorzugt vereinbarten m Kanälen, mit $m < n$, aufweist und wobei die Funkstation (1, 2) Prüfmittel zum Suchen des Kanals mit dieser Kennung auf den bevorzugt vereinbarten m Kanälen in einer ersten Prüfphase (P1) aufweist,
   <u>dadurch gekennzeichnet,</u>

   daß die Funkstation (1, 2) weitere Prüfmittel zum Suchen des Kanals mit der Kennung auf allen n Kanälen in einer zweiten Prüfphase (P2) und Mittel zur Unterbrechung der einzelnen Prüfphasen (P1, P2) durch Wartezeiten ($t_w$, $t_w'$) aufweist und
   daß die Funkstation (1, 2) Mittel zur Suche eines freien Kanals unter allen n Kanälen im Falle, daß alle bevorzugt vereinbarten Kanäle belegt sind, und Mittel zur Aussendung der Kennung auf dem freien Kanal für eine zeitlich begrenzte Zeitspanne ($t_E$) aufweist, wobei die Zeitspanne ($t_E$) länger als die Summe aus der ersten Prüfphase (P1), der zweiten Prüfphase (P2) und den Wartezeiten ($t_w$, $t_w'$) ist.

9. Funkstation nach Anspruch 8,
   <u>dadurch gekennzeichnet,</u>

daß die Funkstation (1, 2) Mittel aufweist, die sicherstellen, daß ein Prüfzyklus ($t_p$) zum Suchen des Kanals mit der Kennung aus der ersten Prüfphase (P1) mit einer sich anschließenden ersten Wartezeit ($t_w$) und der zweiten Prüfphase (P2) mit einer sich anschließenden zweiten Wartezeit ($t_w'$) besteht, in der jeweils der Empfangsteil der Funkstation (2) deaktiviert ist.

## Claims

1. A cordless telephone (1, 2) comprising a base station (1) and a mobile station (2), the base station (1) comprising for setting up a connection to the mobile station (2) on one from n channels transmitter means for transmitting an identification code, and means for searching an idle channel from m, with m < n, preferably compatible channels between base station (1) and mobile station (2), and the mobile station (2) comprising test means for searching the channel that bears this identification code on the m preferably compatible channels in a first test period (P1), characterized in that the mobile station (2) comprises further test means for searching in a second test period (P2) the channel that has the identification code in all the n channels, and means for interrupting the individual test periods (P1, P2) by waiting periods ($t_w$, $t_w'$) and in that the base station (1) comprises means for searching an idle channel from all the n channels if all the preferably compatible channels are occupied, and means for transmitting the identification code on the idle channel for a limited period of time ($t_E$), this period of time ($t_E$) being longer than the sum of the first and second test periods (P1, P2) and the waiting periods ($t_w$, $t_w'$).

2. A cordless telephone as claimed in Claim 1, characterized in that the mobile station (2) comprises means which ensure that a test cycle ($t_p$) for searching the channel that bears the identification code consists of the first test period (P1) with a subsequent first waiting period ($t_w$) and of the second test period (P2) with a subsequent second waiting period ($t_w'$), in which the receiving section of the mobile station (2) is deactivated.

3. A cordless telephone as claimed in Claim 1 or 2, characterized in that compatible m channels are selected blockwise from the n channels, more specifically, as radio channel blocks formed from adjacent channels (FKB-1, FKB-2, ..., FKB-8).

4. A cordless telephone as claimed in one of the Claims 1 to 3, characterised in that the base station (1) and the mobile station (2) comprises a memory for storing a group number.

5. A cordless telephone as claimed in one of the Claims 1 to 4, characterised in that the base station (1) and the mobile station (2) form a pair of radio stations (1, 2) and in that the group number assigned to the pair of radio stations (1, 2) is assigned to the preferably compatible m channels.

6. A cordless telephone as claimed in one of the Claims 1 to 5, characterised in that a number issued substantially equally often during manufacture is used as a group number.

7. A cordless telephone as claimed in one of the Claims 1 to 6, characterised in that the group number of the base station and mobile station (1, 2) is used for assigning a preferred radio channel block (FKB-1, FKB-2, ..., FKB-8).

8. A radio station (1, 2), more particularly a base station (1) and/or a mobile station (2) of a cordless telephone (1, 2), the radio station (1, 2) comprising, for setting up a connection on one from n channels, transmitter means for transmitting an identification code, and means for searching an idle channel from m with m < n, preferably compatible channels, and the radio station (1, 2) comprising test means for searching the channel that bears this identification code on the m preferably compatible channels in a first test period (P1), characterized in that the radio station (1, 2) comprises further test means for searching in a second test period (P2) the channel that has the identification code in all the n channels, and means for interrupting the individual test periods (P1, P2) by waiting periods ($t_w$, $t_w'$) and in that the radio station (1, 2) comprises means for searching an idle channel from all the n channels if all the preferably compatible channels are occupied, and means for transmitting the identification code on the idle channel for a limited period of time ($t_E$), this period of time ($t_E$) being longer than the sum of the first and second test periods (P1, P2) and the waiting periods ($t_w$, $t_w'$).

9. A radio station as claimed in Claim 8, characterized in that the radio station (1, 2) comprises means which ensure that a test cycle ($t_p$) for searching the channel that bears the identification code consists of the first test period (P1) with a subsequent first waiting period ($t_w$) and of the second test period (P2) with a subsequent second waiting period ($t_w'$), in which the receiving section of the mobile station (2) is deactivated.

## Revendications

1. Téléphone sans fil (1, 2) avec station de base (1) et station mobile (2), la station de base (1) présentant en vue de l'établissement d'une liaison avec la station mobile (2) sur l'un des n canaux des moyens de transmission pour l'émission d'une identification et des moyens de recherche d'un canal libre entre m canaux convenus prioritairement entre la station de base (1) et la station mobile (2), m < n et la station mobile (2) présentant des moyens de contrôle pour la recherche du canal avec cette identification sur les m canaux convenus prioritairement dans une première phase de contrôle (P1),

caractérisé en ce

que la station mobile (2) présente plusieurs moyens de contrôle pour la recherche du canal avec l'identification sur tous les n canaux dans une deuxième phase de contrôle (P2) et des moyens pour l'interruption des différentes phases de contrôle (P1, P2) par des délais d'attente ($t_w$, $t_w'$) et en ce que la station de base (1) présente des moyens pour la recherche d'un canal libre parmi tous les n canaux au cas où tous les canaux convenus prioritairement sont occupés et des moyens pour la transmission de l'identification sur le canal libre pour un intervalle limité dans le temps ($t_E$), l'intervalle limité dans le temps ($t_E$) étant plus long que la somme de la première phase de contrôle (P1), de la deuxième phase de contrôle (P2) et des temps d'attente ($t_w$, $t_w'$).

2.  Téléphone sans fil selon la revendication 1,
    caractérisé en ce
    que la station mobile (2) présente des moyens qui garantissent qu'un cycle de contrôle ($t_p$) pour la recherche du canal avec l'identification se compose de la première phase de contrôle (P1) avec un premier temps d'attente consécutif ($t_w$) et de la deuxième phase de contrôle (P2) avec un deuxième temps d'attente consécutif ($t_w'$) au cours duquel le récepteur de la station mobile (2) est respectivement désactivé.

3.  Téléphone sans fil selon l'une des revendications 1 ou 2,
    caractérisé en ce
    que sont prévus comme m canaux convenus des blocs de canaux radio (FKB-1, FKB-2, ..., FKB-8) formés par blocs, en particulier à partir de canaux respectivement voisins qui sont sélectionnés parmi les n canaux.

4.  Téléphone sans fil selon l'une des revendications 1 à 3,
    caractérisé en ce
    que la station de base (1) et la station mobile (2) présentent une mémoire pour la sauvegarde d'un numéro de groupe.

5.  Téléphone sans fil selon l'une des revendications 1 à 4,

caractérisé en ce

que la station de base (1) et la station mobile (2) se composent d'une paire de stations radio (1, 2) et que le numéro de groupe attribué à la paire de stations radio (1, 2) est prévu pour l'affectation des m canaux convenus prioritairement.

6.  Téléphone sans fil selon l'une des revendications. 1 à 5,
    caractérisé en ce
    qu'un nombre attribué à une fréquence quasi régulière lors de la fabrication de la station radio est prévu comme numéro de groupe.

7.  Téléphone sans fil selon l'une des revendications 1 à 6,
    caractérisé en ce
    que le numéro de groupe de la station de base et de la station mobile (1, 2) est prévu pour la distribution d'un bloc de canaux radio prioritaires (FKB-1, FKB-2, FKB-8).

8.  Station radio (1, 2), en particulier station de base (1) et/ou station mobile (2) d'un téléphone sans fil (1, 2), la station radio (1, 2) présentant en vue de l'établissement d'une liaison sur l'un des n canaux des moyens de transmission pour l'émission d'une identification et des moyens de recherche d'un canal libre entre m canaux convenus prioritairement, m < n et la station radio (1, 2) présentant des moyens de contrôle pour la recherche du canal avec cette identification sur les m canaux convenus prioritairement dans une première phase de contrôle (P1),

caractérisé en ce

que la station radio (1, 2) présente plusieurs moyens de contrôle pour la recherche du canal avec l'identification sur tous les n canaux dans une deuxième phase de contrôle (P2) et des moyens pour l'interruption des différentes phases de contrôle (P1, P2) par des délais d'attente ($t_w$, $t_w'$), et en ce que la station radio (1, 2) présente des moyens pour la recherche d'un canal libre parmi tous les n canaux au cas où tous les canaux convenus prioritairement sont occupés et des moyens pour la transmission de l'identification sur le canal libre pour un laps de temps limité ($t_E$), ce laps de temps ($t_E$) étant plus long que la somme de la première phase de contrôle (P1), de la deuxième phase de contrôle (P2) et des temps d'attente ($t_w$, $t_w'$).

9.  Station radio selon la revendication 8,
    caractérisé en ce
    que la station radio (1, 2) présente des moyens qui garantissent qu'un cycle de contrôle ($t_p$)

pour la recherche du canal avec l'identification se compose de la première phase de contrôle (P1) avec un premier temps d'attente consécutif ($t_w$) et de la deuxième phase de contrôle (P2) avec un deuxième temps d'attente consécutif ($t_w'$) au cours duquel le récepteur de la station radio (2) est respectivement désactivé.

FIG.1

FIG. 2

FIG. 3a

FIG.3b

FIG.3c